(19) **Europäisches Patentamt European Patent Office Office européen des brevets**

(11) **EP 3 005 548 B1**

(12) **FASCICULE DE BREVET EUROPEEN**

(45) Date de publication et mention de la délivrance du brevet:
**18.10.2017 Bulletin 2017/42**

(51) Int Cl.:
**B60L 11/18** *(2006.01)*     **H02P 21/22** *(2016.01)*
**H02P 21/00** *(2016.01)*

(21) Numéro de dépôt: **14729958.0**

(22) Date de dépôt: **15.05.2014**

(86) Numéro de dépôt international:
**PCT/FR2014/051129**

(87) Numéro de publication internationale:
**WO 2014/191649 (04.12.2014 Gazette 2014/49)**

(54) **PROCEDE DE COMMANDE D'UNE MACHINE ELECTRIQUE SYNCHRONE, SYSTEME CORRESPONDANT ET VEHICULE AUTOMOBILE COMPRENANT LE SYSTEME**

VERFAHREN ZUR STEUERUNG EINER ELEKTRISCHEN SYNCHRONMASCHINE, ENTSPRECHENDES SYSTEM UND KRAFTFAHRZEUG MIT DEM SYSTEM

METHOD FOR CONTROLLING A SYNCHRONOUS ELECTRICAL MACHINE, CORRESPONDING SYSTEM AND MOTOR VEHICLE COMPRISING THE SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.05.2013 FR 1354741**

(43) Date de publication de la demande:
**13.04.2016 Bulletin 2016/15**

(73) Titulaire: **Renault S.A.S.**
**92100 Boulogne-Billancourt (FR)**

(72) Inventeurs:
• **MALOUM, Abdelmalek**
**F-94550 Chevilly La Rue (FR)**
• **KETFI-CHERIF, Ahmed**
**F-78084 Elancourt (FR)**

(56) Documents cités:
**US-A- 5 955 863     US-A1- 2008 224 649**

EP 3 005 548 B1

**Description**

L'invention concerne la commande d'une machine électrique synchrone à aimant permanent et en particulier la commande des machines électriques destinées à équiper les véhicules automobiles à traction électrique ou hybride.

Dans les véhicules automobiles à traction électrique, le couple fourni par un moteur électrique doit être contrôlé. Le couple d'une machine électrique étant directement lié au courant circulant dans celle-ci, ces courants doivent être commandés de façon précise.

Dans une machine synchrone, notamment une machine synchrone triphasée à aimant permanent et à flux axial, les courants circulant dans les trois phases du stator sont sinusoïdaux et déphasés chacun de $\frac{2\pi}{3} rad$. Ces courants créent un champ magnétique tournant dans la machine électrique. Le rotor est composé d'un aimant permanent, par exemple muni de cinq paires de pôles. Comme une boussole, le rotor s'aligne naturellement sur le champ magnétique tournant créé par le stator. Ainsi, la fréquence de rotation du rotor est égale à la fréquence des courants du stator. Ce sont les amplitudes des courants du stator et la puissance des aimants du rotor qui créent le couple nécessaire à la rotation de la machine. Pour commander ces courants, il faut donc appliquer à chaque phase du stator des tensions sinusoïdales déphasées de $\frac{2\pi}{3} rad$ chacune également.

Généralement, il est plus simple d'appliquer une régulation sur des constantes que sur des signaux sinusoïdaux. La transformée de Park est généralement utilisée pour projeter un système triphasé sur un espace bidimensionnel pour se retrouver dans un repère tournant équivalent. Il est ainsi possible de transposer les trois courants et les trois tensions sinusoïdales du stator relatives aux trois phases d'un système triphasé dans un espace où les signaux sinusoïdaux s'expriment sous la forme de signaux constants (une composante sur l'axe direct d et une composante sur l'axe en quadrature q). Dans le cas d'une machine synchrone le repère de Park est lié au rotor.

En travaillant avec des courants et des tensions exprimées dans l'espace de Park, il est ainsi possible d'agir sur des courants et des tensions constantes plutôt que sur des signaux sinusoïdaux pour réguler la machine triphasée à commander. En faisant la transformée inverse, il est possible de se ramener au repère normal de la machine et donc de savoir exactement quelles tensions ou quels courants appliquer sur chaque phase de la machine.

Généralement on utilise des batteries pour alimenter ces machines. L'utilisation d'une batterie limite les commandes possibles. De ce fait il n'est pas possible d'appliquer n'importe quelles consignes. Les consignes dépassant ces limites peuvent, si elles sont appliquées, rendre la machine instable.

Parmi les contraintes à respecter, il convient généralement d'empêcher la saturation de la machine.

On pourra se référer au document US 3851234 qui décrit une méthode pour éviter la saturation magnétique en réduisant la vitesse du moteur de couple.

On pourra également se référer au document US 5015937 qui décrit la commande d'une machine synchrone à rotor bobiné en boucle ouverte avec des tables de données destinées à éviter les saturations.

Le document US 6181091 décrit la commande d'une machine synchrone à aimant permanent dans laquelle la saturation est évitée en modifiant le fonctionnement de la modulation à largeur d'impulsions qui appliquent des tensions sur chaque branche du moteur. Les documents US5955863 et US2008224649 décrivent aussi des systèmes de commande des machines synchrones permettant d'éviter la saturation. L'invention a pour but de limiter la durée d'une saturation. L'invention a également pour but de conserver la régulation du couple qui doit être fournie par la machine électrique.

L'invention a donc pour objet, selon un premier aspect, un procédé de commande d'une machine électrique synchrone à aimant permanent alimentée par une batterie délivrant une tension d'alimentation à ses bornes.

Selon une caractéristique générale, le procédé comprend :

- un calcul d'une composante initiale directe de tension et d'une composante initiale quadratique de tension dans un repère tournant comprenant une pluralité d'axes,
- une vérification d'une condition de saturation dans laquelle on vérifie, dans un repère orthogonal ayant pour abscisse les composantes directes de tension et pour ordonnée les composantes quadratiques de tension, que le point de coordonnées Vdc et Vqc est en dehors d'un domaine dépendant de Vbat et délimité par un contour, Vdc désignant la composante initiale directe de tension, Vqc désignant la composante initiale quadratique de tension et Vbat désignant la tension d'alimentation aux bornes de la batterie, et, si la condition de saturation est vérifiée,

- un calcul d'un angle $\alpha = \arctan\left(\dfrac{Vqc}{Vdc}\right)$,

- une élaboration de tensions à appliquer à la machine électrique si $\alpha$ varie négativement et Vdc est positif ou si $\alpha$ varie positivement et Vdc est négatif, en déterminant le point d'intersection entre ledit contour et la droite passant par l'origine du repère orthogonal et ledit point de coordonnées Vdc et Vqc, la composante directe de tension à appliquer étant l'abscisse de l'intersection et la composante quadratique de tension à appliquer étant l'ordonnée de l'intersection.

Dans ce procédé, si une condition n'est pas vérifiée, alors on applique les tensions déjà appliquées. Comme on le conçoit, le procédé est mis en oeuvre à un instant, avec toujours la même période entre deux mises en oeuvres. Ce sont les tensions d'une mise en oeuvre précédente qui seront appliquées si une condition n'est pas vérifiée dans le procédé.

Le calcul d'une composante initiale directe de tension et d'une composante initiale quadratique de tension peut être mis en oeuvre par n'importe quel moyen, par exemple en utilisant un correcteur proportionnel intégral ou un correcteur proportionnel intégral dérivé. Le procédé selon l'invention peut donc être mis en oeuvre avec différents systèmes existants.

Le domaine peut être un cercle de rayon $\dfrac{Vbat}{\sqrt{3}}$ centré sur l'origine du repère orthogonal. Ainsi, si $\sqrt{Vdc^2 + Vqc^2}$ est supérieur à $\dfrac{Vbat}{\sqrt{3}}$, alors on considère que la machine électrique est en saturation. Si cette condition n'est pas vérifiée, on peut alors appliquer les tensions appliquées lors de la dernière mise en oeuvre du procédé, après une transformée inverse de Park.

La vérification d'une condition de saturation peut comprendre une comparaison entre : $\sqrt{Vdc^2 + Vqc^2}$ et $\dfrac{Vbat}{\sqrt{3}}$.

Aussi, ladite élaboration de tensions à appliquer peut comprendre une élaboration de tensions à appliquer à la machine électrique avec une composante directe de tension à appliquer égale à $\dfrac{Vbat}{\sqrt{3}}\cos(\alpha)$ et une composante quadratique de tension à appliquer égale à $\dfrac{Vbat}{\sqrt{3}}\sin(\alpha)$ si $\alpha$ varie négativement et Vdc est positif ou si $\alpha$ varie positivement et Vdc est négatif.

Pour obtenir un bon couple et limiter les pertes, il convient de limiter le courant circulant dans l'axe direct. De ce fait, si l'évolution de l'angle $\alpha$ prise en considération avec le signe de la tension Vdc indique que la tension sur l'axe direct va augmenter, alors on sort de la saturation en appliquant de nouvelles valeurs de tension qui permettent de conserver cet angle $\alpha$.

Si la machine est en saturation mais que l'on va vers une diminution de la tension dans l'axe direct, alors on applique les tensions appliquées précédemment. On obtient ainsi un bon couple.

L'invention a également pour objet, selon un autre aspect, un système de commande d'une machine électrique synchrone à aimant permanent alimenté par une batterie ayant une tension à ses bornes.

Selon une caractéristique générale, le système comprend :

- des moyens de calculs configurés pour délivrer une composante initiale directe de tension et une composante initiale quadratique de tension dans un repère tournant comprenant une pluralité d'axes,
- des moyens de calcul configurés pour vérifier une condition de saturation dans un repère orthogonal ayant pour abscisse les composantes directes de tension et pour ordonnée les composantes quadratiques de tension, les moyens configurés pour vérifier une condition de saturation sont configurés pour vérifier que le point de coordonnées Vdc et Vqc est en dehors d'un domaine dépendant de Vbat et délimité par un contour, Vdc désignant la composante initiale directe de tension, Vqc désignant la composante initiale quadratique de tension et Vbat désignant la tension d'alimentation aux bornes de la batterie, et, si la condition de saturation est vérifiée- des moyens de calcul configurés pour calculer un angle $\alpha = \arctan\left(\dfrac{Vqc}{Vdc}\right)$ si ladite condition de saturation est vérifiée,

- des moyens d'élaboration de tensions à appliquer à la machine électrique configurés pour déterminer, si la condition de saturation est vérifiée et si $\alpha$ varie négativement et Vdc est positif ou si $\alpha$ varie positivement et Vdc est négatif,, le point d'intersection entre ledit contour et la droite passant par l'origine du repère orthogonal et ledit point de coordonnées Vdc et Vqc, la composante directe de tension à appliquer étant l'abscisse de l'intersection et la composante quadratique de tension à appliquer étant l'ordonnée de l'intersection.

Les moyens de calcul configurés pour vérifier une condition de saturation peuvent être en outre configurés pour comparer $\sqrt{Vdc^2 + Vqc^2}$ et $\dfrac{Vbat}{\sqrt{3}}$.

Les moyens d'élaboration de tensions à appliquer à la machine électrique peuvent être en outre configurés pour élaborer une composante directe de tension à appliquer égale à $\dfrac{Vbat}{\sqrt{3}}\cos(\alpha)$ et une composante quadratique de tension à appliquer égale à $\dfrac{Vbat}{\sqrt{3}}\sin(\alpha)$ si $\alpha$ varie négativement et Vdc est positif ou si $\alpha$ varie positivement et Vdc est négatif.

L'invention a également pour objet, selon encore un autre aspect, un véhicule automobile à traction électrique ou hybride comprenant une machine synchrone à aimant permanent et ledit système.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1 illustre différentes étapes d'un procédé selon l'invention,
- la figure 2 illustre un système selon l'invention, et
- la figure 3 illustre une représentation graphique pour déterminer si la machine est en saturation.

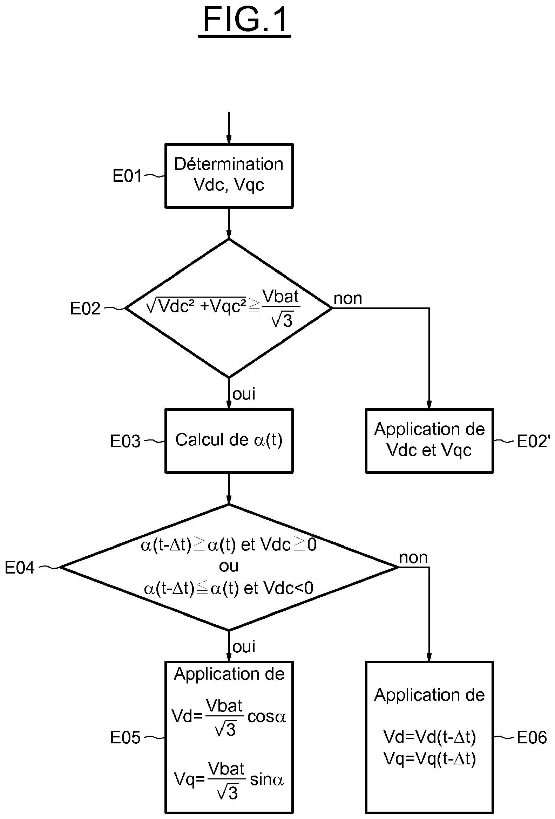

Sur la figure 1, on a représenté de manière schématique des étapes d'un procédé selon un aspect de l'invention. Dans cette exemple, la condition de saturation correspond à la vérification qu'un point est dans un cercle de rayon $\dfrac{Vbat}{\sqrt{3}}$.

Ce procédé permet de commander une machine électrique synchrone, par exemple une machine synchrone de véhicule automobile à traction électrique ou hybride.

Le procédé comprend une étape E01 de calcul d'une composante initiale directe de tension notée Vdc et d'une composante initiale quadratique de tension notée Vqc dans un repère tournant comprenant une pluralité d'axes, par exemple le repère de Park. Le calcul de Vdc et de Vqc peut être mis en oeuvre par n'importe quel moyen, par exemple en utilisant un correcteur proportionnel intégral ou un correcteur proportionnel intégral dérivé.

Le procédé comprend ensuite une étape de test E02 dans laquelle on compare $\sqrt{Vdc^2 + Vqc^2}$ et $\dfrac{Vbat}{\sqrt{3}}$, Vbat étant la tension d'alimentation fournie par la batterie qui alimente la machine électrique. Si cette condition n'est pas vérifiée, on met en oeuvre l'étape E02' dans laquelle on applique directement à la machine Vdc et Vqc.

Si $\sqrt{Vdc^2 + Vqc^2}$ est supérieur à $\dfrac{Vbat}{\sqrt{3}}$, on met en oeuvre une étape E03 de calcul d'un angle noté $\alpha$, obtenu par le calcul suivant $\alpha = \arctan\left(\dfrac{Vqc}{Vdc}\right)$.

Le calcul de l'angle $\alpha$ permet de mettre en oeuvre une autre étape de test E04 dans laquelle, à un instant t, on vérifie comment varie alpha par rapport à la précédente mise en oeuvre du procédé à l'instant t-$\Delta$t, et on vérifie le signe de Vdc.

Si $\alpha$ varie négativement et que Vdc est positif, ou si $\alpha$ varie positivement et que Vdc est négatif, alors on peut mettre en oeuvre l'étape E05 et appliquer une tension sur l'axe direct égale à $\dfrac{Vbat}{\sqrt{3}}\cos(\alpha)$ et une tension sur l'axe

quadratique égale à $\dfrac{Vbat}{\sqrt{3}}\sin(\alpha)$.

Si le test de l'étape E04 n'est pas vérifié, alors l'étape E06 est mise en oeuvre, dans laquelle on applique les tensions déjà appliquées lors de la mise en oeuvre précédente du procédé.

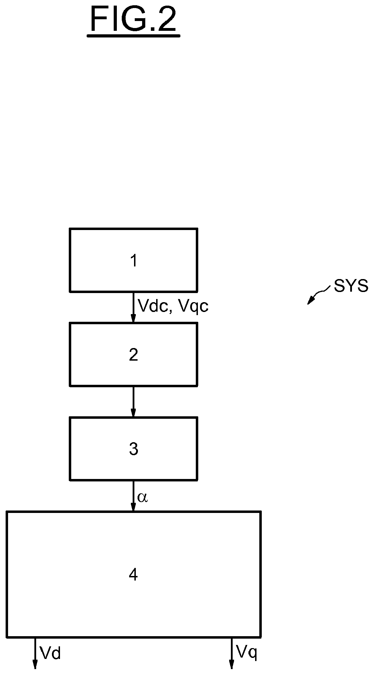

Sur la figure 2, on a représenté schématiquement un système SYS de commande d'une machine électrique synchrone à aimant permanent alimenté par une batterie.

Les différents moyens de calcul du système SYS peuvent être compris dans une unité de calcul, par exemple une unité de commande électronique d'un véhicule automobile.

Le système SYS comprend des moyens de calculs 1 configurés pour mettre en oeuvre l'étape E01 et délivrer une composante initiale directe de tension Vdc et une composante initiale quadratique de tension Vdc dans un repère tournant comprenant une pluralité d'axe, par exemple le repère de Park. Vdc et Vqc étant des consignes de tension calculées lors de l'étape E01 que l'on souhaite appliquer.

Le système SYS comprend également des moyens de calcul 2 pour mettre en oeuvre l'étape E02 et configurés pour comparer $\sqrt{Vdc^2 + Vqc^2}$ et $\dfrac{Vbat}{\sqrt{3}}$.

Le système SYS comprend également des moyens de calcul 3 configurés pour calculer un angle $\alpha = \arctan\left(\dfrac{Vqc}{Vdc}\right)$ si $\sqrt{Vdc^2 + Vqc^2}$ est supérieur à $\dfrac{Vbat}{\sqrt{3}}$ (et mettre en oeuvre l'étape E03).

Le système SYS comprend également des moyens d'élaboration 4 de tensions à appliquer à la machine, les moyens étant configurés pour délivrer, si $\sqrt{Vdc^2 + Vqc^2}$ est supérieur à $\dfrac{Vbat}{\sqrt{3}}$, une composante directe de tension à appliquer égale à $\dfrac{Vbat}{\sqrt{3}}\cos(\alpha)$ et une composante quadratique de tension à appliquer égale à $\dfrac{Vbat}{\sqrt{3}}\sin(\alpha)$ si $\alpha$ varie négativement et Vdc est positif ou si $\alpha$ varie positivement et Vdc est négatif.

Il convient de noter que dans l'espace de Park, le système d'équation à commander pour la machine synchrone est le suivant :

$$\begin{cases} V_d = R_s I_d + L_d \dot{I}_d - \omega_r L_q I_q \\ V_q = R_s I_q + L_q \dot{I}_q - \omega_r \left(L_d I_d + \phi_f\right) \end{cases} \qquad (1)$$

Avec $V_d$ et $V_q$ les tension appliquées sur les deux axes respectivement direct et en quadrature du plan de Park de la machine, $I_d$ et $I_q$ les courants circulant dans la machine sur les deux axes respectivement direct et en quadrature du plan de Park, $R_s$ la résistance équivalente du stator de la machine, $L_d$ et $L_q$ les inductances sur chaque axe respectivement direct et en quadrature du plan de Park de la machine, $\omega_r$ la vitesse de rotation du champ magnétique de la machine (soit la vitesse de rotation du rotor multipliée par le nombre de paires de pôles de la machine), et $\phi_f$ le flux généré par les aimants du rotor.

Pour une machine dans laquelle $L_d$ et $L_q$ sont égaux, on obtient la valeur de couple électromagnétique $C_{em}$ suivante :

$$C_{em} = p\Phi_f I_q$$

Avec p le nombre de paires de pôles du rotor de la machine.

C'est ce couple que l'on souhaite conserver tout en évitant la saturation.

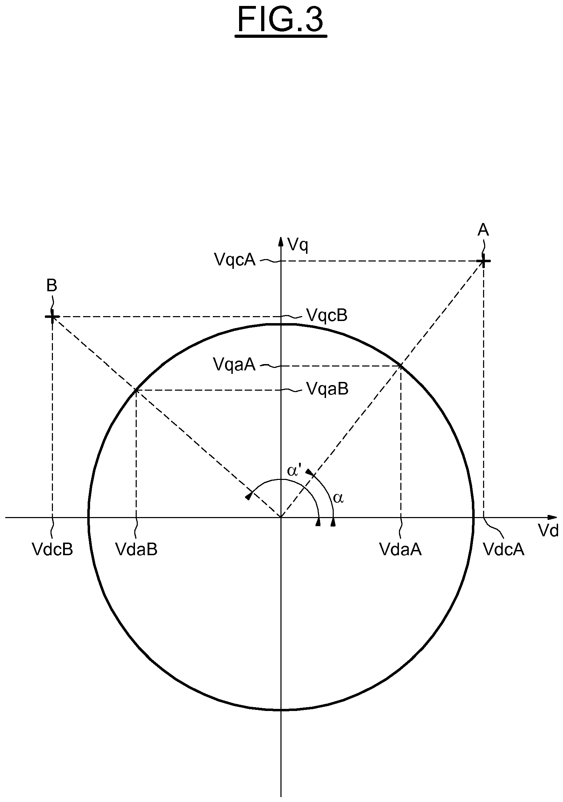

La figure 3 est une représentation graphique de valeurs de tensions respectivement direct et en quadrature (Vd en abscisse et Vq en ordonnée) du plan de Park de la machine.

Sur cette figure, on a représenté par un cercle en trait épais la limite de saturation. Les points de fonctionnement situés à l'intérieur de ce cercle correspondent à des fonctionnements non-saturés.

Si on obtient par calcul le point de fonctionnement A, correspondant à VdcA et VqcA, on peut constater que l'on est en saturation. On peut alors déterminer l'angle $\alpha$ représenté sur la figure 3.

Si on constate que l'angle $\alpha$ a diminué par rapport à la dernière mise en oeuvre du procédé, et puisque VdcA est positif, alors on applique des composantes de tension directe et en quadrature en choisissant un point correspondant à l'intersection entre le cercle et la droite partant de l'origine avec un angle $\alpha$. Ce point a pour abscisse VdaA et pour ordonnée VqaA.

Si au contraire l'angle $\alpha$ a augmenté, alors on continue d'appliquer les mêmes valeurs de tension.

Si on obtient par calcul le point de fonctionnement B, correspondant à VdcB (négatif) et VqcB, on peut constater que l'on est en saturation. On peut alors déterminer l'angle $\alpha'$ représenté sur la figure 3.

Si on constate que l'angle $\alpha'$ a augmenté par rapport à la dernière mise en oeuvre du procédé, et puisque VdcB est négatif, alors on applique des composantes de tension directe et en quadrature en choisissant un point correspondant à l'intersection entre le cercle et la droite partant de l'origine avec un angle $\alpha'$. Ce point a pour abscisse VdaB et pour ordonnée VqaB.

Si au contraire l'angle $\alpha$ a diminué, alors on continue d'appliquer les mêmes valeurs de tension.

Grâce à l'invention, on peut rapidement sortir d'une saturation, tout en conservant une bonne régulation des tensions, en particulier un courant nul sur l'axe direct.

## Revendications

1. Procédé de commande d'une machine électrique synchrone à aimant permanent alimentée par une batterie délivrant une tension d'alimentation à ses bornes, **caractérisé en ce qu'**il comprend :

   - un calcul (E01) d'une composante initiale directe de tension et d'une composante initiale quadratique de tension dans un repère tournant comprenant une pluralité d'axes,
   - une vérification d'une condition de saturation (E02) dans laquelle on vérifie, dans un repère orthogonal ayant pour abscisse les composantes directes de tension et pour ordonnée les composantes quadratiques de tension, que le point de coordonnées Vdc et Vqc est en dehors d'un domaine dépendant de Vbat et délimité par un contour, Vdc désignant la composante initiale directe de tension, Vqc désignant la composante initiale quadratique de tension et Vbat désignant la tension d'alimentation aux bornes de la batterie, et, si la condition de saturation est vérifiée,

   - un calcul (E03) d'un angle $\alpha = \arctan\left(\dfrac{Vqc}{Vdc}\right)$,

   - une élaboration (E04) de tensions à appliquer à la machine électrique si $\alpha$ varie négativement et Vdc est positif ou si $\alpha$ varie positivement et Vdc est négatif, en déterminant le point d'intersection entre ledit contour et la droite passant par l'origine du repère orthogonal et ledit point de coordonnées Vdc et Vqc, la composante directe de tension à appliquer étant alors l'abscisse de l'intersection et la composante quadratique de tension à appliquer étant alors l'ordonnée de l'intersection, tandis que si ces conditions sur l'angle $\alpha$ et la tension Vdc ne sont pas vérifiées, alors on applique les tensions déjà appliquées lors de la mise en oeuvre précédente du procédé.

2. Procédé selon la revendication 1, dans lequel ladite vérification d'une condition de saturation (E02) comprend une comparaison entre $\sqrt{Vdc^2 + Vqc^2}$ et $\dfrac{Vbat}{\sqrt{3}}$.

3. Procédé selon la revendication 2, dans lequel ladite élaboration de tensions à appliquer (E03) comprend une élaboration de tensions à appliquer à la machine électrique avec une composante directe de tension à appliquer égale à $\dfrac{Vbat}{\sqrt{3}}\cos(\alpha)$ et une composante quadratique de tension à appliquer égale à $\dfrac{Vbat}{\sqrt{3}}\sin(\alpha)$ si $\alpha$ varie négativement et Vdc est positif ou si $\alpha$ varie positivement et Vdc est négatif.

4. Système de commande d'une machine électrique synchrone à aimant permanent alimenté par une batterie ayant une tension à ses bornes, **caractérisé en ce qu'**il comprend :

   - des moyens de calculs (1) configurés pour délivrer à un instant une composante initiale directe de tension et une composante initiale quadratique de tension dans un repère tournant comprenant une pluralité d'axes,
   - des moyens de calcul (2) configurés pour vérifier une condition de saturation dans un repère orthogonal ayant pour abscisse les composantes directes de tension et pour ordonnée les composantes quadratiques de tension, les moyens configurés pour vérifier une condition de saturation sont configurés pour vérifier que le point de coordonnées Vdc et Vqc est en dehors d'un domaine dépendant de Vbat et délimité par un contour, Vdc désignant la composante initiale directe de tension, Vqc désignant la composante initiale quadratique de tension et Vbat désignant la tension d'alimentation aux bornes de la batterie, et, si la condition de saturation est vérifiée

- des moyens de calcul (3) configurés pour calculer un angle $\alpha = \arctan\left(\dfrac{Vqc}{Vdc}\right)$ si ladite condition de saturation est vérifiée,

- des moyens d'élaboration (4) de tensions à appliquer à la machine électrique configurés pour déterminer, si la condition de saturation est vérifiée et si $\alpha$ varie négativement et Vdc est positif ou si $\alpha$ varie positivement et Vdc est négatif, le point d'intersection entre ledit contour et la droite passant par l'origine du repère orthogonal et ledit point de coordonnées Vdc et Vqc, la composante directe de tension à appliquer étant l'abscisse de l'intersection et la composante quadratique de tension à appliquer étant l'ordonnée de l'intersection, tandis que si la condition de saturation est vérifiée mais ces conditions sur l'angle $\alpha$ et la tension Vdc ne sont pas vérifiées, alors les tensions à appliquer sont les tensions appliquées à l'instant précédent par le système de commande.

5. Système selon la revendication 4, dans lequel les moyens de calcul (2) configurés pour vérifier une condition de saturation sont en outre configurés pour comparer $\sqrt{Vdc^2 + Vqc^2}$ et $\dfrac{Vbat}{\sqrt{3}}$.

6. Système selon la revendication 5, dans lequel lesdits moyens d'élaboration (4) de tensions à appliquer à la machine électrique sont configurés pour élaborer une composante directe de tension à appliquer égale à $\dfrac{Vbat}{\sqrt{3}}\cos(\alpha)$ et une composante quadratique de tension à appliquer égale à $\dfrac{Vbat}{\sqrt{3}}\sin(\alpha)$ si $\alpha$ varie négativement et Vdc est positif ou si $\alpha$ varie positivement et Vdc est négatif.

7. Véhicule automobile à traction électrique ou hybride comprenant une machine synchrone à aimant permanent et le système de commande de la machine selon les revendications 3 à 6.

**Patentansprüche**

1. Verfahren zur Steuerung einer elektrischen Synchronmaschine mit Permanentmagnet, die von einer Batterie gespeist wird, die an ihren Klemmen eine Speisespannung liefert, **dadurch gekennzeichnet, dass** es umfasst:

    - eine Berechnung (E01) einer Anfangs-Längsspannungskomponente und einer Anfangs-Querspannungskomponente in einem rotierenden Koordinatensystem, das mehrere Achsen umfasst,
    - eine Überprüfung einer Sättigungsbedingung (E02), wobei in einem orthogonalen Koordinatensystem, das als Abszisse die Längsspannungskomponenten und als Ordinate die Querspannungskomponenten aufweist, überprüft wird, ob der Punkt mit den Koordinaten Vdc und Vqc außerhalb eines Bereichs liegt, der von Vbat abhängig ist und von einer Kontur begrenzt wird, wobei Vdc die Anfangs-Längsspannungskomponente bezeichnet, Vqc die Anfangs-Querspannungskomponente bezeichnet und Vbat die Speisespannung an den Klemmen der Batterie bezeichnet, und falls die Sättigungsbedingung erfüllt ist,
    - eine Berechnung (E03) eines Winkels

$$\alpha = \arctan\left(\frac{Vqc}{Vdc}\right),$$

    - eine Bereitstellung (E04) von Spannungen, die an die elektrische Maschine anzulegen sind, falls $\alpha$ negativ variiert und Vdc positiv ist oder falls $\alpha$ positiv variiert und Vdc negativ ist, durch Bestimmen des Schnittpunktes zwischen der Kontur und der Geraden, die durch den Ursprung des orthogonalen Koordinatensystems und den Punkt mit den Koordinaten Vdc und Vqc verläuft, wobei die anzulegende Längsspannungskomponente dann die Abszisse des Schnittpunktes ist und die anzulegende Querspannungskomponente dann die Ordinate des Schnittpunktes ist, wohingegen dann, wenn diese Bedingungen bezüglich des Winkels $\alpha$ und der Spannung Vdc nicht erfüllt sind, die Spannungen angelegt werden, die bereits bei der vorhergehenden Durchführung des Verfahrens angelegt wurden.

2. Verfahren nach Anspruch 1, wobei die Überprüfung einer Sättigungsbedingung (E02) einen Vergleich zwischen $\sqrt{Vdc^2 + Vqc^2}$ und $\dfrac{Vbat}{\sqrt{3}}$ umfasst.

3. Verfahren nach Anspruch 2, wobei die Bereitstellung von anzulegenden Spannungen (E03) eine Bereitstellung von an die elektrische Maschine anzulegenden Spannungen mit einer anzulegenden Längsspannungskomponente, die gleich $\dfrac{Vbat}{\sqrt{3}}\cos(\alpha)$ ist, und einer anzulegenden Querspannungskomponente, die gleich $\dfrac{Vbat}{\sqrt{3}}\sin(\alpha)$ ist, umfasst, falls $\alpha$ negativ variiert und Vdc positiv ist oder falls $\alpha$ positiv variiert und Vdc negativ ist.

4. System zur Steuerung einer elektrischen Synchronmaschine mit Permanentmagnet, die von einer Batterie gespeist wird, die an ihren Klemmen eine Speisespannung aufweist, **dadurch gekennzeichnet, dass** es umfasst:

- Berechnungsmittel (1), die dafür ausgelegt sind, zu einem Zeitpunkt eine Anfangs-Längsspannungskomponente und eine Anfangs-Querspannungskomponente in einem rotierenden Koordinatensystem zu liefern, das mehrere Achsen umfasst,
- Berechnungsmittel (2), die dafür ausgelegt sind, eine Sättigungsbedingung in einem orthogonalen Koordinatensystem zu überprüfen, das als Abszisse die Längsspannungskomponenten und als Ordinate die Querspannungskomponenten aufweist, wobei die Mittel, die dafür ausgelegt sind, eine Sättigungsbedingung zu überprüfen, dafür ausgelegt sind zu überprüfen, ob der Punkt mit den Koordinaten Vdc und Vqc außerhalb eines Bereichs liegt, der von Vbat abhängig ist und von einer Kontur begrenzt wird, wobei Vdc die Anfangs-Längsspannungskomponente bezeichnet, Vqc die Anfangs-Querspannungskomponente bezeichnet und Vbat die Speisespannung an den Klemmen der Batterie bezeichnet, und falls die Sättigungsbedingung erfüllt ist,
- Berechnungsmittel (3), die dafür ausgelegt sind, einen Winkel $\alpha = \arctan\left(\dfrac{Vqc}{Vdc}\right)$ zu berechnen, falls die Sättigungsbedingung erfüllt ist,
- Mittel zur Bereitstellung (4) von an die elektrische Maschine anzulegenden Spannungen, die dafür ausgelegt sind, falls die Sättigungsbedingung erfüllt ist und falls $\alpha$ negativ variiert und Vdc positiv ist oder falls $\alpha$ positiv variiert und Vdc negativ ist, den Schnittpunkt zwischen der Kontur und der Geraden, die durch den Ursprung des orthogonalen Koordinatensystems und den Punkt mit den Koordinaten Vdc und Vqc verläuft, zu bestimmen, wobei die anzulegende Längsspannungskomponente die Abszisse des Schnittpunktes ist und die anzulegende Querspannungskomponente die Ordinate des Schnittpunktes ist, wohingegen dann, wenn die Sättigungsbedingung erfüllt ist, jedoch diese Bedingungen bezüglich des Winkels $\alpha$ und der Spannung Vdc nicht erfüllt sind, die anzulegenden Spannungen die Spannungen sind, die zum vorhergehenden Zeitpunkt von dem Steuerungssystem angelegt wurden.

5. System nach Anspruch 4, wobei die Berechnungsmittel (2), die dafür ausgelegt sind, eine Sättigungsbedingung zu überprüfen, außerdem dafür ausgelegt sind, $\sqrt{Vdc^2 + Vqc^2}$ und $\dfrac{Vbat}{\sqrt{3}}$ zu vergleichen.

6. System nach Anspruch 5, wobei die Mittel zur Bereitstellung (4) von an die elektrische Maschine anzulegenden Spannungen dafür ausgelegt sind, eine anzulegende Längsspannungskomponente, die gleich $\dfrac{Vbat}{\sqrt{3}}\cos(\alpha)$ ist, und eine anzulegende Querspannungskomponente, die gleich $\dfrac{Vbat}{\sqrt{3}}\sin(\alpha)$ ist, bereitzustellen, falls $\alpha$ negativ variiert und Vdc positiv ist oder falls $\alpha$ positiv variiert und Vdc negativ ist.

7. Kraftfahrzeug mit elektrischem Antrieb oder Hybridantrieb, welches eine Synchronmaschine mit Permanentmagnet und das System zur Steuerung der Maschine nach den Ansprüchen 3 bis 6 umfasst.

**Claims**

1. Method for controlling a synchronous electrical machine with permanent magnet powered by a battery delivering a power supply voltage at its terminals, **characterized in that** it comprises:

   - a computation (E01) of an initial direct voltage component and of an initial quadratic voltage component in a revolving reference frame comprising a plurality of axes,
   - a verification of a saturation condition (E02) in which it is verified, in an orthogonal reference frame having the direct voltage components for X-axis and the quadratic voltage components for Y-axis, that the point of coordinates Vdc and Vqc is outside of a range dependent on Vbat and delimited by a contour, Vdc denoting the initial direct voltage component, Vqc denoting the initial quadratic voltage component and Vbat denoting the power supply voltage at the terminals of the battery, and, if the saturation condition is verified,

   - a computation (E03) of an angle $\alpha = \arctan\left(\dfrac{Vqc}{Vdc}\right)$,

   - a generation (E04) of voltages to be applied to the electrical machine if α varies negatively and Vdc is positive or if $\alpha$ varies positively and Vdc is negative, by determining the point of intersection between said contour and the straight line passing through the origin of the orthogonal reference frame and said point of coordinates Vdc and Vqc, the direct voltage component to be applied then being the X-axis of the intersection and the quadratic voltage component to be applied then being the Y-axis of the intersection, whereas, if these conditions on the angle α and the voltage Vdc are not verified, then the voltages already applied in the preceding implementation of the method are applied.

2. Method according to Claim 1, in which said verification of a saturation condition (E02) comprises a comparison between $\sqrt{Vdc^2 + Vqc^2}$ and $\dfrac{Vbat}{\sqrt{3}}$ .

3. Method according to Claim 2, in which said generation of voltages to be applied (E03) comprises a generation of voltages to be applied to the electrical machine with a direct voltage component to be applied equal to $\dfrac{Vbat}{\sqrt{3}}\cos(\alpha)$

   and a quadratic voltage component to be applied equal to $\dfrac{Vbat}{\sqrt{3}}\sin(\alpha)$ if $\alpha$ varies negatively and Vdc is positive or if $\alpha$ varies positively and Vdc is negative.

4. System for controlling a synchronous electrical machine with permanent magnet powered by a battery having a voltage at its terminals, **characterized in that** it comprises:

   - computation means (1) configured to deliver, at an instant, an initial direct voltage component and an initial quadratic voltage component in a revolving reference frame comprising a plurality of axes,
   - computation means (2) configured to verify a saturation condition in an orthogonal reference frame having the direct voltage components for X-axis and the quadratic voltage components for Y-axis, the means configured to verify a saturation condition being configured to verify that the point of coordinates Vdc and Vqc is outside of a range dependent on Vbat and delimited by a contour, Vdc denoting the initial direct voltage component, Vqc denoting the initial quadratic voltage component and Vbat denoting the power supply voltage at the terminals of the battery, and, if the saturation condition is verified,

   - computation means (3) configured to compute an angle $\alpha = \arctan\left(\dfrac{Vqc}{Vdc}\right)$ if said saturation condition is verified,
   - means (4) for generating voltages to be applied to the electrical machine configured to determine, if the saturation condition is verified and if $\alpha$ varies negatively and Vdc is positive or if $\alpha$ varies positively and Vdc is negative, the point of intersection between said contour and the straight line passing through the origin of the orthogonal reference frame and said point of coordinates Vdc and Vqc, the direct voltage component to be applied being the X-axis of the intersection and the quadratic voltage component to be applied being the Y-axis of the intersection, whereas, if the saturation condition is verified but these conditions on the angle $\alpha$ and the voltage Vdc are not verified, then the voltages to be applied are the voltages applied at the preceding instant by the control system.

5. System according to Claim 4, in which the computation means (2) configured to verify a saturation condition are further configured to compare $\sqrt{Vdc^2 + Vqc^2}$ and $\dfrac{Vbat}{\sqrt{3}}$ .

6. System according to Claim 5, in which said means (4) for generating voltages to be applied to the electrical machine are configured to generate a direct voltage component to be applied equal to $\dfrac{Vbat}{\sqrt{3}}\cos(\alpha)$ and a quadratic voltage component to be applied equal to $\dfrac{Vbat}{\sqrt{3}}\sin(\alpha)$ if $\alpha$ varies negatively and Vdc is positive or if $\alpha$ varies positively and Vdc is negative.

7. Motor vehicle with electric or hybrid drive comprising a synchronous machine with permanent magnet and the machine control system according to Claims 3 to 6.

## FIG.1

E01 — Détermination Vdc, Vqc

E02 — $\sqrt{Vdc^2 + Vqc^2} \geq \dfrac{Vbat}{\sqrt{3}}$ — non

oui

E03 — Calcul de $\alpha(t)$

Application de Vdc et Vqc — E02'

E04 — $\alpha(t-\Delta t) \geq \alpha(t)$ et $Vdc \geq 0$
ou
$\alpha(t-\Delta t) \leq \alpha(t)$ et $Vdc < 0$ — non

oui

Application de

$Vd = \dfrac{Vbat}{\sqrt{3}} \cos\alpha$

E05 —

$Vq = \dfrac{Vbat}{\sqrt{3}} \sin\alpha$

Application de

$Vd = Vd(t-\Delta t)$
$Vq = Vq(t-\Delta t)$ — E06

# FIG.2

# FIG.3

## RÉFÉRENCES CITÉES DANS LA DESCRIPTION

**Documents brevets cités dans la description**

- US 3851234 A
- US 5015937 A
- US 6181091 B
- US 5955863 A
- US 2008224649 A